# EUROPÄISCHE PATENTSCHRIFT

(11) **EP 0 720 800 B1**
(45) Veröffentlichungstag und Bekanntmachung des Hinweises auf die Patenterteilung: **16.12.1998**
(21) Anmeldenummer: 94927606.7
(22) Anmeldetag: 13.09.1994
(51) Int. Cl.: H04N 5/52, H04N 5/50

(54) **HOCHFREQUENZEMPFÄNGER**
HIGH-FREQUENCY RECEIVER
RECEPTEUR DE HAUTES FREQUENCES

(30) Priorität: 22.09.1993 DE 4332161
(43) Veröffentlichungstag der Anmeldung: 10.07.1996
(73) Patentinhaber: DEUTSCHE THOMSON-BRANDT GMBH, 78048 Villingen-Schwenningen (DE)
(72) Erfinder: ROTH, Sabine, D-78087 Mönchweiler (DE); RIEGER, Martin, D-78628 Rottweil (DE)
(74) Vertreter: Wördemann, Hermes, Dipl.-Ing.
(86) Internationale Anmeldenummer: EP9403049
(87) Internationale Veröffentlichungsnummer: WO9508895

(56) Entgegenhaltungen:
- EP-A- 0 176 703
- EP-A- 0 302 290
- EP-A- 0 392 772
- EP-A- 0 571 790
- DE-A- 3 346 678
- DE-A- 4 038 110
- IEEE TRANSACTIONS ON CONSUMER ELECTRONICS, Bd.36, Nr.3, 30. August 1990, NEW YORK US Seiten 407 - 413, XP000162868 MCGINN M. ET AL 'AN ADVANCED I.F. AMPLIFIER & AFT SYSTEM SUITABLE FOR HDTV'

## Beschreibung

Die Erfindung geht aus von einem Hochfrequenzempfänger gemäß dem Oberbegriff des Anspruchs 1. Derartige Hochfrequenzempfänger werden insbesondere in Fernsehempfängern, Videorecordern und Rundfunkempfängern eingesetzt.

Derartige Empfänger haben in der Praxis unter bestimmten Bedingungen oder bei bestimmten Frequenzen des empfangenen HF-Signals ein unbefriedigendes Signal/Rausch-Verhältnis. Der Erfindung liegt die Aufgabe zugrunde, bei einem derartigen Hochfrequenzempfänger das Signal/Rausch-Verhältnis zu verbessern. Gemäß einer Weiterbildung der Erfindung wird auch die AFT-Schaltung zur automatischen Scharfabstimmung über die Nachregelung des Mischoszillators verbessert.

Diese Aufgabe wird durch die im Anspruch 1 angegebene Erfindung gelöst. Vorteilhafte Weiterbildungen der Erfindung sind in den abhängigen Ansprüchen angegeben. Schaltungen zur Verbesserung der AFT-Scharfabstimmung sind in den abhängigen Ansprüchen 5 - 7 angegeben.

Herkömmliche Schaltungen arbeiten mit einer festen Sollwertspannung für die AGC-Schwundregelschaltung, derart, daß die Amplitude der HF-Spannung am Eingang der Mischstufe auf einen konstanten Wert geregelt wird. DE-A-3 346 678 offenbart eine Schwundregelschaltung, bei der die Amplitude des empfangenen Signals unabhängig von der Frequenz am Eingang des ZF-Verstärkers konstant ist. Die Erfindung beruht nun auf der Erkenntnis, daß die Mischstufe nicht bei allen Frequenzen des zugeführten HF-Signals die gleichen Eigenschaften hat. Vielmehr kann die Mischstufe bei bestimmten Frequenzen weiter ausgesteuert werden und bei anderen Frequenzen weniger weit. Dieser Tatsache wird nun durch die Erfindung Rechnung getragen, indem die Amplitude am Eingang der Mischstufe nicht mehr auf einen konstanten Wert geregelt ist. Vielmehr wird die Amplitude auf unterschiedliche, von der jeweiligen Frequenz des HF-Signals abhängige Werte geregelt. Dies erfolgt so, daß die Mischstufe immer bis zur Grenze ausgesteuert ist, also gerade so weit, daß in der Mischstufe keine Verzerrungen auftreten. Durch diese Regelung bis an die Aussteuerungsgrenze bei allen Frequenzen des empfangenen HF-Signals wird somit das Signal/Rausch-Verhältnis zumindest in bestimmten Frequenzbereichen erhöht und das dargestellte Bild hinsichtlich Störabstand und Rauschen verbessert.

Die genannte Weiterbildung der Erfindung beruht auf folgender Überlegung. Es sind Schaltungen bekannt, bei denen am den Ausgang des ZF-Verstärkers eine PLL-Schaltung angeschlossen ist. Die PLL-Schaltung erzeugt aus dem amplitudenmodulierten Bildträger den unmodulierten Bildträger. Dieser wird in dem Demodulator zur Synchrondemodulation oder Demodulation mit Trägerzusatz des empfangenen amplitudenmodulierten Bildträgers verwendet. Die innerhalb der PLL-Schaltung wirksame Regelspannung ist dabei von der Frequenz des ZF-Trägers abhängig. Diese Regelspannung wird daher zusätzlich für die Nachregelung des Mischoszillators in dem Sinne ausgenutzt, daß der ZF-Träger am Ausgang des ZF-Verstärkers seinen Sollwert hat und somit das zwischen der Mischstufe und dem ZF-Verstärker liegende ZF-Bandfilter optimal angesteuert wird.

Ausführungsbeispiele der Erfindung werden im folgenden anhand der Zeichnung erläutert. Darin zeigen
- Fig. 1: einen Hochfrequenzempfänger mit der erfindungsgemäßen Schaltung und
- Fig. 2: einen Hochfrequenzempfänger gemäß Fig. 1 mit einer AFT-Schaltung gemäß der genannten Weiterbildung der Erfindung.

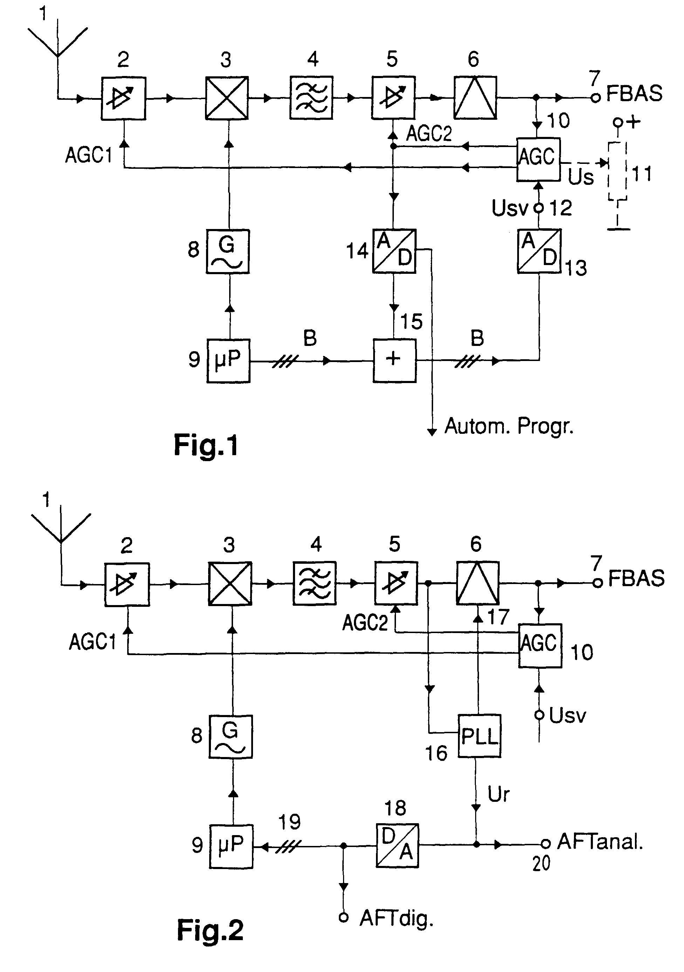

Fig. 1 zeigt einen Hochfrequenzempfänger mit der Antenne 1, dem HF-Verstärker 2, der Mischstufe 3, dem ZF-Filter 4, dem ZF-Verstärker 5 und dem Demodulator 6, der an der Klemme 7 das FBAS-Signal liefert. An die Mischstufe 3 ist der Ausgang des Mischoszillators 8 angeschlossen. Dieser wird von dem Mikroprozessor 9 zur Abstimmung auf den jeweils gewünschten Sender angesteuert.

An den Ausgang des Demodulators 6 ist die AGC-Schaltung 10 für eine Schwundregelung angeschlossen. Diese liefert eine erste Regelspannung AGC1 für den HF-Verstärker 2 und eine zweite Regelspannung AGC2 für den ZF-Verstärker 5. An die AGC-Schaltung 10 ist bei bekannten Schaltungen von dem Potentiometer 11 eine feste Sollwertspannung Us angelegt. Diese Spannung bestimmt, auf welche Amplitude der HF-Spannung am Eingang der Mischstufe 3 die Regelung erfolgt. Die HF-Spannung am Eingang der Mischstufe 3 wird dabei auf einen konstanten, von der Sollwertspannung Us abhängigen Wert geregelt.

Das Potentiometer 11 mit der fest eingestellten Sollwertspannung Us ist nun nicht mehr vorhanden. Stattdessen hat die AGC-Schaltung 10 einen Eingang 12, an den eine von der Frequenz des empfangenen HF-Trägers abhängige Sollwertspannung Usv angelegt ist. Zu diesem Zweck liefert der Mikroprozessor 9, der die Abstimmung steuert und daher die Information über die jeweilige Frequenz des empfangenen HF-Trägers beinhaltet, über den Bus B eine die Frequenz des empfangenen HF-Trägers anzeigende digitale Spannung. Diese gelangt auf den Eingang des D/A-Wandlers 13. Dieser liefert an seinem Ausgang an den Eingang 12 nunmehr eine variable, von der Frequenz des empfangenen HF-Trägers abhängige Sollwertspannung Usv. Die Abhängigkeit von Usv von der Frequenz des mit der Antenne 1 empfangenen HF-Trägers ist derart, daß die Mischstufe 3 bei allen Empfangsfrequenzen voll ausgesteuert ist. Der jeweilige Zusammenhang zwischen Usv und der Empfangsfrequenz wird vorzugsweise empirisch ermittelt.

Die Regelspannung AGC2 für die Regelung der Verstärkung des ZF-Verstärkers 5 ist zusätzlich an den Eingang des A/D-Wandlers 14 angelegt, der ein die Regelspannung AGC2 darstellendes digitales Signal erzeugt. Dieses Signal wird in der Addierstufe 15 dem digitalen Signal vom Mikoroprozessor 9 zugefügt. Auf diese Weise wird eine zusätzliche Anpassung von Usv und damit der Schwundregelung an die jeweilige Signalstärke erreicht. Der A/D-Wandler 14 kann zusätzlich ein digitales Signal für eine automatische Programmierung des Empfängers liefern. Eine derartige automatische Programmierung benötigt ein Signal für den jeweiligen Pegel des empfangenen Senders, damit nur die Sender programmiert werden, deren Pegel groß genug ist. Dieses Signal kann somit aus dem jeweiligen Wert der Regelspannung AGC2 über den A/D-Wandler 14 geliefert werden.

Fig. 2 zeigt eine Schaltung gemäß Fig. 1 mit folgender Ergänzung. An den Ausgang des ZF-Verstärkers 5 ist die PLL-Schaltung 16 angeschlossen. Die Schaltung 16 erzeugt aus dem mit dem Leuchtdichtesignal amplitudenmodulierten ZF-Träger den unmodulierten Bildträger, der über die Leitung 17 dem Demodulator 6 für eine Synchrondemodulation oder sogenannte Demodulation mit Trägerzusatz zugeführt wird. Eine derartige Demodulationsart ermöglicht geringere Verzerrungen des gewonnenen Leuchtdichtesignals. Innerhalb der PLL-Schaltung 16 ist eine Regelspannung Ur wirksam, die von der Frequenz des ZF-Trägers abhängig ist. Diese Regelspannung wird nun zusätzlich dem A/D-Wandler zugeführt. Dieser liefert ein die jeweilige Frequenz oder Frequenzabweichung darstellendes digitales Signal über den Bus 19 an den Mikroprozessor 9. Auf diese Weise erfolgt eine automatische Nachstimmung des Mischoszillators 8 in dem Sinne, daß der ZF-Träger am Ausgang der Mischstufe 3 seine Sollfrequenz hat und das ZF-Filter 4 richtig ausgesteuert wird. Vom Ausgang des A/D-Wandlers 18 kann eine digitale AFT-Spannung abgenommen werden. Der Ausgang der PLL-Schaltung 16 liefert außerdem an der Klemme 20 eine analoge AFT-Regelspannung, die gegebenenfalls zur Nachstimmung einem Mischoszillator zugeführt werden kann.

## Patentansprüche

1. Hochfrequenzempfänger mit einem HF-Verstärker (2), einer Mischstufe (3), einem Mischoszillator (8), einem Demodulator (6) und einer AGC-Schwundregelschaltung (10), an die die Ausgangsspannung des Demodulators (6) und eine Sollwertspannung angelegt sind und die die Regelspannungen (AGC1, AGC2) für den HF-Verstärker (1) und den ZF-Verstärker (5) liefert, **dadurch gekennzeichnet**, daß die Amplitude der Sollwertspannung (Us) und damit die Amplitude des HF-Signals am Eingang der Mischstufe (3) derart in Abhängigkeit von der Frequenz des empfangenen HF-Signals gesteuert ist, daß die Mischstufe (3) bei allen Frequenzen soweit ausgesteuert ist, daß in der Mischstufe (3) gerade keine Verzerrungen auftreten.

2. Empfänger nach Anspruch 1, **dadurch gekennzeichnet**, daß ein den Oszillator (8) zur Abstimmung steuernder Mikroprozessor (9) über einen D/A-Wandler (13) an den Sollwertspannungs-Eingang (12) der AGC-Schaltung (10) angeschlossen ist.

3. Empfänger nach Anspruch 1, **dadurch gekennzeichnet**, daß die AGC-Regelspannung (AGC2) für den ZF-Verstärker (5) an den Eingang eines A/D-Wandlers (14) angelegt ist, dessen digitale Ausgangsspannung der vom Mikroprozessor (9) dem D/A-Wandler (13) zugeführten digitalen Spannung hinzugefügt ist.

4. Empfänger nach Anspruch 3, **dadurch gekennzeichnet**, daß der Ausgang des A/D-Wandlers (14) zusätzlich an eine Schaltung zur automatischen Senderprogrammierung mit Sendersuchlauf angeschlossen ist.

5. Empfänger nach Anspruch 1, **dadurch gekennzeichnet**, daß an den Ausgang des ZF-Verstärkers (5) eine PLL-Schaltung (16) zur Regenerierung des unmodulierten Bildträgers für eine Synchrondemodulation des empfangenen modulierten Bildträgers angeschlossen ist.

6. Empfänger nach Anspruch 5, **dadurch gekennzeichnet**, daß die Regelspannung (Ur) der PLL-Schaltung (16) für eine AFT-Nachstimmung des Mischoszillators (8) ausgesteuert ist.

7. Empfänger nach Anspruch 6, **dadurch gekennzeichnet**, daß ein Ausgang der PLL-Schaltung (16), dessen Spannung (Ur) die Frequenzabweichung des ZF-Trägers vom Sollwert anzeigt, über einen A/D-Wandler (18) an einen Eingang eines den Mischoszillator (8) zur Senderabstimmung steuernden Mikroprozessors (9) angeschlossen ist.

## Claims

1. Radio-frequency receiver with an RF amplifier (2), a mixer stage (3), a mixer oscillator (8), a demodulator (6) and an AGC automatic fading compensation circuit (10) to which the output voltage of the demodulator (6) and a voltage of desired value are applied and which supplies the control voltages (AGC1, AGC2) for the RF amplifier (1) and the IF amplifier (5), characterized in that the amplitude of the voltage (Us) of a desired value and thus the amplitude of the RF signal at the input of the mixer stage (3) is controlled as a function of the frequency of the received RF signal in such a way that the mixer stage (3) is modulated at all frequencies just to such a point that no distortions occur in the mixer stage (3).

2. Receiver according to claim 1, characterized in
that a microprocessor (9) which controls the oscillator (8) for tuning is connected via a digital-analog converter (13) to the desired voltage value input (12) of the AGC circuit (10).

3. Receiver according to claim 1, characterized in that the AGC control voltage (AGC2) for the IF amplifier (5) is applied to the input of an analog-digital converter (14) whose digital output voltage is added to the digital voltage fed to the digital-analog converter (13) by the microprocessor (9).

4. Receiver according to claim 3, characterized in that the output of the analog digital converter (14) is additionally connected to a circuit for automatic transmitter programming with station finding.

5. Receiver according to claim 1, characterized in that a PLL circuit (16) for regenerating the unmodulated image carrier for a synchronous demodulation of the received modulated image carrier is connected to the output of the IF amplifier (5).

6. Receiver according to claim 5, characterized in that the control voltage (Ur) of the PLL circuit (16) is modulated for an AFT retuning of the mixer oscillator (8).

7. Receiver according to claim 6, characterized in that an output of the PLL circuit (16) whose voltage (Ur) indicates the frequency deviation of the IF carrier from the desired value is connected via an analog-digital converter (18) to an input of a microprocessor (9) which controls the mixer oscillator (8) for transmitter tuning.

## Revendications

1. Récepteur de hautes fréquences avec un amplificateur HF (2), un étage mélangeur (3), un oscillateur-mélangeur (8), un démodulateur (6) et un circuit de régulation d'évanouissement CAG (10) auquel sont appliquées la tension de sortie du démodulateur (6) et une tension de consigne et qui délivre les tensions de réglage (AGC1, AGC2) pour l'amplificateur HF (1) et l'amplificateur FI (5), **caractérisé en ce que** l'amplitude de la tension de consigne (Us), et avec elle l'amplitude du signal HF à l'entrée de l'étage mélangeur (3), est commandée en fonction de la fréquence du signal HF reçu, de sorte que l'étage mélangeur (3) est excité pour chaque fréquence aussi loin que n'apparaît aucune distorsion dans l'étage mélangeur (3).

2. Récepteur d'après la revendication 1, **caractérisé en ce que** un microprocesseur (9) commandant l'oscillateur (8) pour l'accord, est relié via un convertisseur numérique / analogique (13) à l'entrée de la tension de consigne (12) du circuit CAG (10).

3. Récepteur d'après la revendication 1, **caractérisé en ce que** la tension de réglage CAG (AGC2) pour l'amplificateur FI (5) est appliquée à l'entrée d'un convertisseur analogique/numérique (14), dont la tension de sortie numérique est ajoutée à la tension numérique transmise par le microprocesseur (9) au convertisseur numérique / analogique (13).

4. Récepteur d'après la revendication 3, **caractérisé en ce que** la sortie du convertisseur analogique/numérique (14) est en plus reliée à un circuit pour la programmation automatique d'émetteurs avec marche de détection des émetteurs.

5. Récepteur d'après la revendication 1, **caractérisé en ce que** à la sortie de l'amplificateur FI (5) est relié un circuit à boucle asservie en phase (16) servant à la régénération de la porteuse d'image non modulée, pour une démodulation synchrone de la porteuse d'image modulée reçue.

6. Récepteur d'après la revendication 5, **caractérisé en ce que** la tension de réglage (Ur) du circuit à boucle asservie en phase (16) est excitée pour un accord fin automatique de l'oscillateur-mélangeur (8).

7. Récepteur d'après la revendication 6, **caractérisé en ce que** une sortie du circuit à boucle asservie en phase (16), dont la tension (Ur) indique l'écart de fréquence de la porteuse FI par rapport à la valeur de consigne, est reliée via un convertisseur analogique / numérique (18), à une entrée d'un microprocesseur (9) commandant l'oscillateur-mélangeur (8) pour l'accord de l'émetteur.
